# EUROPÄISCHE PATENTSCHRIFT

(11) **EP 2 048 022 B1**
(45) Veröffentlichungstag und Bekanntmachung des Hinweises auf die Patenterteilung: **29.12.2010**
(21) Anmeldenummer: 08014113.8
(22) Anmeldetag: 07.08.2008
(51) Int. Cl.: B60N 2/16, B60N 2/30, B60N 2/015

(54) **Fahrzeugsitz, insbesondere Kraftfahrzeugsitz**
Vehicle seat, in particular motor vehicle seat
Siège de véhicule, en particulier siège de véhicule automobile

(30) Priorität: 12.10.2007 DE 102007049067
(43) Veröffentlichungstag der Anmeldung: 15.04.2009
(73) Patentinhaber: Recaro GmbH & Co. KG, 73230 Kirchheim/Teck (DE)
(72) Erfinder: Schumann, Kai, 66509 Rieschweiler-Mühlbach (DE); Teufel, Ingo, 67806 Rockenhausen (DE)
(74) Vertreter: Patentanwälte Hosenthien-Held und Dr. Held

(56) Entgegenhaltungen:
- EP-A- 1 176 048
- DE-A1- 19 942 976
- FR-A- 2 526 289
- GB-A- 940 100

## Beschreibung

Die Erfindung betrifft einen Fahrzeugsitz, insbesondere einen Kräftfahrzeugsitz, mit den Merkmalen des Oberbegriffs des Anspruches 1.

Bei einem aus der EP 1 176 048 B1 bekannten Fahrzeugsitz ist die Sitzschale vorne an einem schwenkbaren Teil des Sitzrahmens angelenkt und hinten beidseitig mittels eines Schub-Dreh-Lagers am Sitzrahmen-Seitenteil gelagert. Die Sitzrahmen-Seitenteil dienen auch zur Befestigung der Beschläge, mittels denen die Lehne am Sitzrahmen angelenkt ist.

Die GB 940 100 A zeigt einen Fahrzeugsitz der eingangs genannten Art mit einem Kombibolzen mittels verschiedener Abschnitt das Beschlagunterteil lagert und die Sitzschale auf einem Seitenteil lagert, welches auf einer Schiene abgestützt ist.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1. gelöst. Vorteilhafte Ausgestaltungen sind Gegenstand der Unteransprüche.

Mit dem Kombibolzen, der zum einen das Beschlagunterteil am Sitzrahmen-Seitenteil befestigt und der zum anderen die Sitzschale lagert, wird ein multifunktionales Bauteil geschaffen, welches mehrere Einzelbauteile ersetzt und nicht nur für die normalen.Gewichtskräfte, sondern auch für die Aufnahme und Weiterleitung von Crashkräften ausgelegt ist. Der Kombibolzen ist in der durch die Längsrichtung und Höhe aufgespannten Ebene in der Regel im Bereich des H-Punktes angeordnet.

Für seine verschiedenen Funktionen weist der Kombibolzen über seine Länge hinweg verschiedene Abschnitte unterschiedlichen Durchmessers oder sonstiger Abmessung auf, die dann den einzelnen Funktionen zugeordnet sind, beispielsweise als Lager oder als seitliche Anschläge dienen.

Der erfindungsgemäße Fahrzeugsitz hat vorzugsweise ein sehr niedriges Blockmaß, d.h. mit der geringsten einstellbaren Höhe ist unterhalb des hinteren Bereichs der Sitzschale praktisch kein Bauraum mehr vorhanden. Dies wird durch eine geeignete Kinematik der Schwingen erreicht. Hierfür ist es von Vorteil, wenn die Schwingen des Höheneinstellers geteilt sind, beispielsweise in an der Basis angelenkte Schwingen und in einem Winkel dazu abstehende Schwingenhebeln, wobei diese Teile mittels eines Querrohres untereinander verbunden sind. Dies erlaubt auch eine Breitenvarianz, d.h. eine Abstimmung auf unterschiedliche Breiten.

Einerseits legt fehlender Bauraum im hinteren Bereich der Sitzschale die Anordnung des Antriebs des Höheneinstellers im vorderen Bereich der Sitzrahmens nahe. Da andererseits im Crashfall hinten mehr Kräfte aufgenommen werden können, ist es vorteilhaft, den. Höheneinsteller hinten anzutreiben. Dies wird vorzugsweise gelöst durch eine Koppel, welche den vorne angeordneten Antrieb mit der hinteren Schwinge koppelt. Damit die Koppel bei Druckbelastungen nicht seitlich ausknickt, erfüllt der Kombibolzen eine weitere Aufgabe, nämlich die Führung der Koppel, beispielsweise indem er durch ein Langloch in der Koppel greift und einen geeigneten Sicherungsring trägt. In den Kombibolzen kann auch ein Gewichtssensor integriert sein.

Die Befestigung des Beschlagunterteils am Sitzrahmen-Seitenteil erfolgt vorzugsweise mittels einer Schraubverbindung, in welcher der Kombibolzen beispielsweise als Mutter eingesetzt wird. Da üblicherweise die Lehne mit Beschlägen vormontiert ist, kann somit die gepolsterte Lehne in einem sehr späten Stadium des Zusammenbaus des Fahrzeugsitzes nach Abschluss aller Schweißarbeiten an den Sitzrahmen-Seitenteilen montiert werden. Zugleich ist es möglich, dass die Beschlagunterteile Bestandteile des Sitzrahmens werden, was auf einfache Weise unterschiedliche Mäterialstärken des Sitzrahmens ermöglicht. Querrohre, worunter auch eckige Profile verstanden werden sollen, schließen den Sitzrahmen in der Querrichtung.

Die Lagerung der Sitzschale auf dem Kombibolzen erfolgt vorzugsweise lose oder mit einer leichten Clipsverbindung, so dass auch die gepolsterte Sitzschale in einem sehr späten Stadium des Zusammenbaus des Fahrzeugsitzes nach Abschluss aller Schweißarbeiten am Sitzrahmen montiert werden kann.

Die diversen Einsteller, beispielsweise Längseinsteller, Höheneinsteller und Neigungseinsteller für Sitzschale und Lehne können jeweils manuell oder motorisch angetrieben sein. Zudem sind beliebige Kombinationen dieser Einsteller möglich.

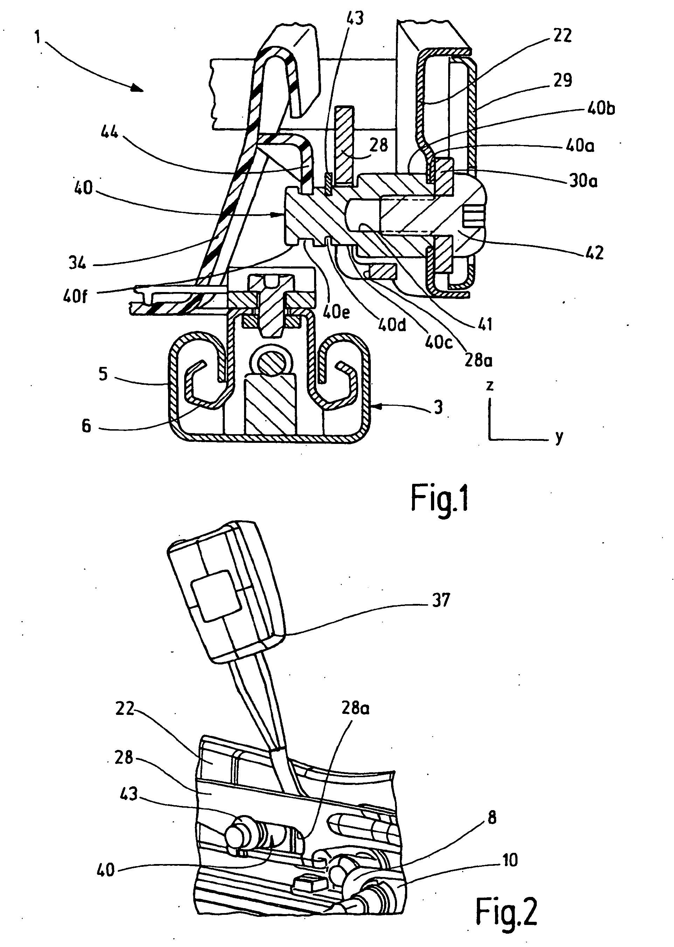

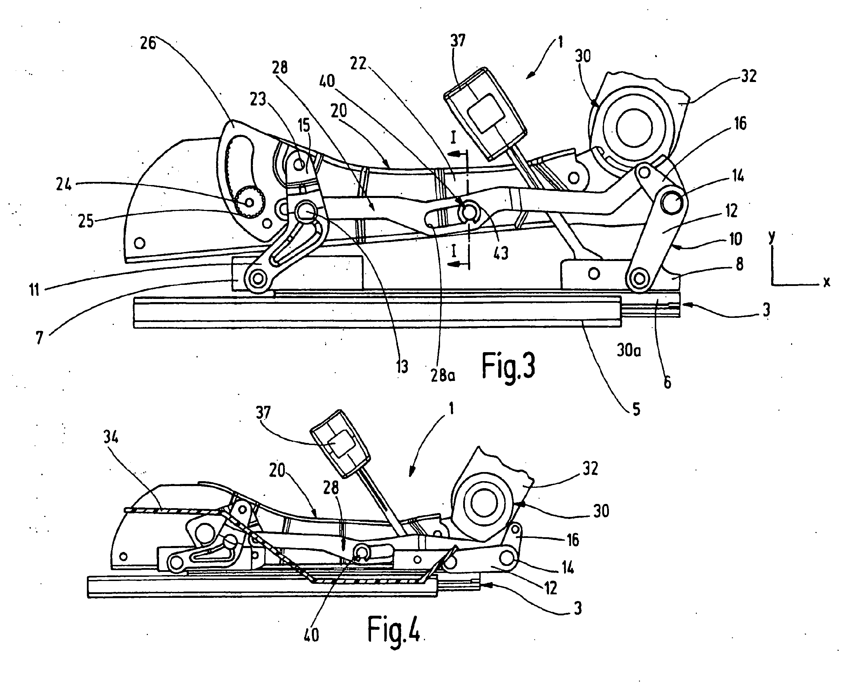

Im folgenden ist die Erfindung anhand eines in der Zeichnung dargestellten Ausführungsbeispiels näher erläutert. Es zeigen
- Fig. 1: einen Schnitt durch das Ausführungsbeispiel entlang der Linie I-I in Fig. 3,
- Fig. 2: eine perspektivische Teilansicht des Ausführungsbeispiels im Bereich des Kombibolzens,
- Fig. 3: einen Längsschnitt durch das Ausführungsbeispiel in oberer Höheneinstell- position,
- Fig. 4: einen Längsschnitt durch das Ausführungsbeispiel in unterer Höheneinstell- position,
- Fig. 5: eine perspektivische Teilansicht des Ausführungsbeispiels im vorderen Be- reich, ,
- Fig. 6: eine perspektivische Teilansicht des Höheneinstellers, und
- Fig. 7: eine weitere perpektivische Teilansicht des Höheneinstellers, und
- Fig. 8: einen Schnitt durch den Kombibolzen im Bereich der Gabel.

Ein Fahrzeugsitz 1 ist vorliegend als Vordersitz eines Kraftfahrzeuges vorgesehen, wobei die Anordnung des Fahrzeugsitzes 1 innerhalb des Kraftfahrzeuges und dessen gewöhnliche Fahrtrichtung einige der nachfolgend verwendeten Richtungsangaben definieren, nämlich die Längsrichtung x, welche parallel zur Fahrtrichtung ist, die Querrichtung y, welche senkrecht zur Längsrichtung x und horizontal verläuft, und die Höhe z, welche senkrecht zur Längsrichtung x und zur Querrichtung y verläuft.

Der Fahrzeugsitz 1 weist eine Basis 3 auf, vorliegend auf jeder der beiden Fahrzeugsitzseiten bestehend aus einer ersten Sitzschiene 5, welche mit der Fahrzeugstruktur zu verbindend ist, einer zweiten Sitzschiene 6, welche zur Längseinstellung des Fahrzeugsitzes 1 relativ zur ersten Sitzschiene 5 in Längsrichtung x motorisch (oder alternativ manuell) verschiebbar ist, und einem vorderen Adapter 7 und einem hinteren Adapter 8, welche mit der zweiten Sitzschiene 6 fest verbunden sind.

Auf der Basis 3 sitzt ein Höheneinsteller 10. Vorliegend weist der Höhenensteller 10 auf jeder der beiden Fahrzeugsitzseiten eine vordere Schwinge 11, welche an ihrem unteren Ende am vorderen Adapter 7 (und damit an der Basis 3) angelenkt ist, und eine hintere Schwinge 12 auf, welche an ihrem unteren Ende am hinteren Adapter 8 (und damit ebenfalls an der Basis 3) angelenkt ist. Der Höheneinsteller 10 weist ferner ein vorderes Querrohr 13, an welchem die beiden vorderen Schwingen 11 mit ihrem oberen Ende befestigt sind, ein hinteres Querrohr 14, an welchem die beiden hinteren Schwingen 12 mit ihrem oberen Ende befestigt sind, auf beiden Fahrzeugsitzseiten je einen vorderen Schwingenhebel 15, welcher am vorderen Querrohr 13 befestigt ist, und auf beiden Fahrzeugsitzseiten je einen hinteren Schwingenhebel 16 auf, welcher am hinteren Querrohr 14 befestigt ist. Die Befestigung erfolgt vorzugsweise jeweils mittels Schweißen. Der Winkel zwischen jeder Schwingen 11 oder 12 zu dem jeweils zugeordneten Schwingenhebel 15 oder 16 hängt von den genauen Anforderungen ab und beeinflusst die mit dem Höheneinsteller 10 minimal und maximal einstellbare Höhe. Der in Querrichtung y bestehende Abstand jeder Schwingen 11 oder 12 zu dem jeweils zugeordneten Schwingenhebel 15 oder 16 ist entsprechend dem zur Verfügung stehenden Bauraum gewählt, womit eine Breitenvarianz ohne Modifizierung der Einzelteile möglich ist.

Der Fahrzeugsitz 1 weist einen Sitzrahmen 20 auf, welcher mittels des Höheneinstellers 10 mit der Basis 3 verbunden und relativ zu dieser in der Höhe z einstellbar ist. Hierzu weist der Sitzrahmen 20 auf jeder Fahrzeugsitzseite ein Sitzrahmen-Seitenteil 22 auf, an welchem jeweils der vordere Schwingenhebel 15 mittels eines Gelenks 23 angelenkt ist. Parallel zur Fluchtlinie der beiden Gelenke 23 und damit parallel zum vorderen Querrohr 13 ist eine Welle 24 des Höheneinstellers 10 angeordnet. Die Welle 24 ist an den beiden Sitzrahmen-Seitenteilen 22 gelagert und trägt beidseitig je ein Ritzel 25, d.h. drehfest mit diesem verbunden ist. Die Welle 24 kann von einem weiteren Querrohr umschlossen sein. Jedes Ritzel 25 kämmt mit einem bogenförmigen Zahnsgement 26 des Höheneinstellers 10. Das Zahnsegment 26 ist ebenfalls mittels des Gelenks 23 am zugeordneten Sitzrahmen-Seitenteil 22 angelenkt. Die Welle 24 ist mittels eines auf der Außenseite eines der beiden Sitzrahmen-Seitenteile 22 angeordneten Getriebes, d.h. um ihre eigene Achse drehbar. Das Getriebe ist manuell, beispielsweise mittels eines Handrades, oder motorisch, beispielsweise mittels eines elektrischen Motors, antreibbar. Der Motor kann alternativ, beispielsweise mittels eines Spindel-Mutter-Getriebes, auf das nächstgelegene Zahnsegment 26 oder, beispielsweise mittels einer Schnecke, auf das nächstgelegene Ritzel 25 einwirken.

Auf beiden Fahrzeugsitzseiten ist auf der Innenseite der Sitzrahmen-Seitenteile 22 eine Koppel 28 des Höheneinstellers 10 angeordnet. Die Koppel 28 koppelt den - vorne angeordneten - Antrieb des Höheneinstellers 10 an eine der hinteren Schwingen 12. Die Koppel 28 ist nämlich an ihrem vorderen Ende am Zahnsegement 26 angelenkt, und zwar im Abstand zum Gelenk 23, und an ihrem hinteren Ende am hinteren Schwingenhebel 16 angelenkt. Auf der Außenseite sind die Sitzrahmen-Seitenteile 22, welche nach außen gebogene Randbereiche aufweisen, jeweils durch eine Aussteifung 29, welche in der Art eines Deckels wirkt, geschlossen.

Am hinteren Ende jedes Sitzrahmen-Seitenteils 22 ist ein Beschlag 30 angeordnet, welcher als Getriebebeschlag oder als Rastbeschlag ausgebildet sein kann. Der Beschlag 30 weist zwei relativ zueinander verdrehbare Beschlagteile auf, von denen das Beschlagunterteil 30a fest mit dem zugeordneten Sitzrahmen-Seitenteil 22 verbunden ist, während das Beschlagoberteil die Lehne 32 des Fahrzeugsitzes 1 trägt und fest oder mittels einer zusätzlichen Verriegelung mit dieser verbunden ist. Mittels der beiden Beschläge 30 ist die Neigung der Lehne 32 einstellbar. Das hintere Querrohr 14 ist drehbar in den beiden Beschlagunterteilen 30a gelagert. Somit wird im Ausführungsbeispiel der Sitzrahmen 10 durch die beiden Sitzrahmen-Seitenteile 22, die Beschlagunterteile 30a, das hintere Querrohr 14 und die Welle 24 definiert. Der Sitzrahmen 10 trägt eine Sitzschale 34, welche ebenso wie die Lehne 32 eine geeignete Polsterung aufweist. Die Sitzschale 34 ist dabei an ihrem vorderen Ende an der Welle 24 oder an den Sitzrahmen-Seitenteilen 22 oder einem nicht näher dargestellten Neigungseinsteller abgestützt. Ein Gurtschloss 37 kann mit seiner Peitsche an einem der beiden hinteren Adapter 12 befestigt sein.

Am Sitzrahmen 20 ist, vorliegend beidseitig, ein Kombibolzen 40 vorgesehen, welcher mehrere Funktionen erfüllt. Der Kombibolzen 40 befestigt das Beschlagunterteil 30a am Sitzrahmen-Seitenteil 22, er führt die Koppel 28 und er lagert die Sitzschale 34. Der Kombibolzen 40 ist rotationssymmetrisch und mit seiner Symmetrieachse in Querrichtung y ausgerichtet. Im Kombibolzen 40 ist entlang dessen Symmetrieachse ein Sackloch 41 ausgebildet, welches sich nach außen öffnet und in welches eine Schraube 42 eindrehbar ist. Der Kombibolzen 40 weist entlang der Querrichtung y mehrere zylindrische Abschnitte mit unterschiedlichen Radien aufweist, die nachfolgend von außen nach innen gezählt sind.

Ein erster Abschnitt 40a und daran anschließender zweiter Abschnitt 40b von größerem Durchmesser bilden einen Absatz. Mit dem ersten Abschnitt 40a ist der Kombibolzen 40 von innen her durch eine passende Öffnung des zugeordneten Sitzrahmen-Seitenteils 22 gesteckt, bis der zweite Abschnitt 40b mit dem besagten Absatz an der Innenseite des Sitzrahmen-Seitenteils 22 anliegt. Der erste Abschnitt 40a schließt außen vorzugsweise bündig mit der Außenseite des Sitzrahmen-Seitenteils 22 ab, oder er weist eine gegenüber der Materialstärke des Sitzrahmen-Seitenteils 22 geringfügig kleinere axiale Länge auf. Das Beschlagunterteil 30a liegt auf der Außenseite des Sitzrahmen-Seitenteils 22 an, wobei eine Öffnung im Beschlagunterteil 30a mit dem Kombibolzen 40 fluchtet. Von außen her ist die Schraube 42 durch die Öffnung im Beschlagunterteil 30a gesteckt und in das Sackloch 41 des Kombibolzens 40 geschraubt, womit der Kombibolzen 40 die erste Funktion erfüllt. Der Schraube 42 kann zur Lagerung des Beschlagunterteils 30a mit einem entsprechenden Bund versehen sein, oder die Öffnung im Beschlagunterteil 30a weist zum Toleranzausgleich einen geringfügig größeren Durchmesser als die Schraube 42 auf.

An den zweiten Abschnitt 40b schließt sich ein dritter Abschnitt 40c von geringerem Durchmesser an, beispielsweise mit gleichem Durchmesser wie der erste Abschnitt. Dieser dritte Abschnitt 40c weist im Abstand vom zweiten Abschnitt 40b einen Stich 40d auf, also quasi einen inneren Abschnitt mit nochmals kleinerem Durchmesser. Im Stich 40d sitzt ein Sicherungsring 43, beispielsweise ein Federring oder ein aufgeschrumpfter Ring. Anstelle des Stichs 40d mit dem Sicherungsring 43 kann am Kombibolzen 40 ein umlaufender Wulst angeformt sein. Im axialen Bereich zwischen dem zweiten Abschnitt 40b und dem Sicherungsring 43 (oder Wulst) wird der dritte Abschnitt 40c von der Koppel 28 mittels eines in der Koppel 28 ausgebildeten Langlochs 28a mit Spiel in radialer Richtung und in axialer Richtung umschlossen. Der Kombibolzen 40 führt dadurch mit seinem dritten Abschnitt 40c die Koppel 28. Vorliegend ist die Koppel 28 sogar im Bereich des Langlochs 28a an ihrer Unterseite bis in den Bereich des zweiten Abschnitts 40b umgebogen. Der Sicherungsring 43 (oder Wulst) und der zweite Abschnitt 40b sichern die Koppel 28 in axialer Richtung. Der dritte Abschnitt 40c kann sich axial über den Stich 40d hinaus fortsetzen.

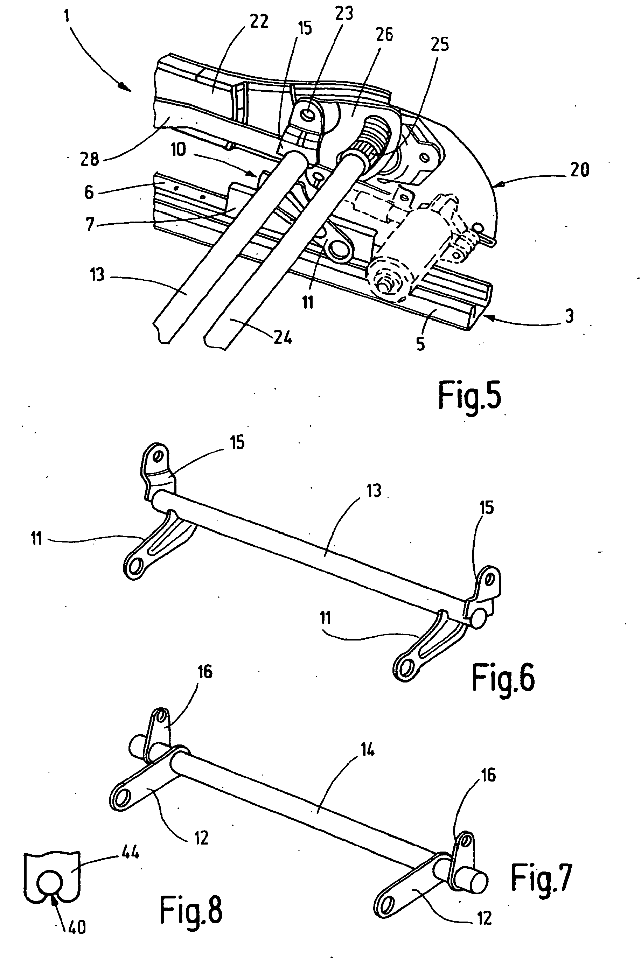

An den dritten Abschnitt 40c schließt sich ein vierter Abschnitt 40e an, der gegenüber dem dritten Abschnitt 40c oder wenigstens gegenüber dem Wulst, einen geringeren Durchmesser aufweist, beispielsweise den gleichen Durchmesser wie der Stich 40d. Von der Sitzschale 34 steht im hinteren Bereich auf beiden Fahrzeugsitzseiten je eine Gabel 44 ab, die beispielsweise angeformt oder gesondert ausgebildet und mit der Sitzschale 34 verbunden ist. Die Gabel 44 öffnet sich nach unten und sitzt auf dem vierten Abschnitt Stich 40e. Der Kombibolzen 40 lagert dadurch die Sitzschale 34. Dabei kann in axialer Richtung des Kombibolzens 40 ein Spiel vorgesehen sein, d.h. die axiale Abmessung des vierten Abschnitts 40e kann etwas größer als die Materialstärke der Gabel 44 sein. Vorzugsweise besteht die Gabel aus Kunststoff und schließt sich geringfügig hinter dem eingeführten Kombibolzen 40. So entsteht mit diesem Hinterschnitt eine Art Clipsverbindung, wie in Fig. 8 angedeutet. Zur axialen Sicherung der Gabel 44 schließt sich an den vierten Abschnitt 40e vorzugsweise ein fünfter Abschnitt 40f von größerem Durchmesser als der vierte Abschnitt 40e an, beispielsweise ein weiterer Wulst.

In Abwandlungen hierzu erfüllt der Kombibolzen 40 nur zwei Funktionen, beispielsweise die Befestigung des Beschlagunterteils 30a am Sitzrahmen-Seitenteil 22 und die Lagerung der Sitzschale 34.

### Bezugszeichenliste

- 1: Fahrzeugsitz
- 3: Basis
- 5: erste Sitzschiene
- 6: zweite Sitzschiene
- 7: vorderer Adapter
- 8: hinterer Adapter
- 10: Höheneinsteller
- 11: vordere Schwinge
- 12: hintere Schwinge
- 13: vorderes Querrohr
- 14: hinteres Querrohr
- 15: vorderer Schwingenhebel
- 16: hinterer Schwingenhebel
- 20: Sitzrahmen
- 22: Sitzrahmen-Seitenteil
- 23: Gelenk
- 24: Welle
- 25: Ritzel
- 26: Zahnsegment
- 28: Koppel
- 28a: Langloch
- 29: Aussteifung
- 30: Beschlag
- 30a: Beschlagunterteil
- 32: Lehne
- 34: Sitzschale
- 37: Gurtschloss
- 40: Kombibolzen
- 40a: erster Abschnitt

- 40b: zweiter Abschnitt
- 40c: dritter Abschnitt
- 40d: Stich
- 40e: vierter Abschnitt
- 40f: fünfter Abschnitt
- 41: Sackloch
- 42: Schraube
- 43: Sicherungsring
- 44: Gabel
- x: Längsrichtung
- y: Querrichtung
- z: Höhe

## Patentansprüche

1. Fahrzeugsitz, insbesondere Kraftfahrzeugsitz, mit einem Sitzrahmen (20), welcher wenigstens ein Sitzrahmen-Seitenteil (22) aufweist, einer vom Sitzrahmen (20) getragenen Sitzschale (34), wenigstens einem ein Beschlagunterteil (30a) aufweisenden Beschlag (30), einer Lehne (32), welche mittels des Beschlags (30) mit dem Sitzrahmen (20) verbunden ist, und wenigstens einem Kombibolzen (40), der zum einen das Beschlagunterteil (30a) am Sitzrahmen-Seitenteil (22) befestigt und der zum anderen die Sitzschale (34) lagert, wobei der Kombibolzen (40) verschiedene Abschnitte (40a, 40b; 40c, 40d, 40e) unterschiedlichen Durchmessers oder sonstiger Abmessung aufweist, darunter einen ersten Abschnitt (40a) und einen zweiten Abschnitt (40b), **dadurch gekennzeichnet, dass** der Sitzrahmen (20) mittels eines Höheneinstellers (10) mit einer Basis (3) verbunden ist, wobei mittels des Höheneinstellers (10) der Sitzrahmen (20) relativ zur Basis (3) in der Höhe (z) einstellbar ist, und wobei der Höheneinsteller (10) vordere und hintere Schwingen (11, 12) und wenigstens eine Koppel (28) aufweist, welche den - vorne angeordneten - Antrieb des Höheneinstellers (10) an eine der hinteren Schwingen (12) koppelt, wobei der Kombibolzen (40) mittels eines dritten Abschnitts (40c) die Koppel (28) führt.

2. Fahrzeugsitz nach Anspruch 1, **dadurch gekennzeichnet, dass** das Beschlagunterteil (30a) am ersten Abschnitt (40a) des Kombibolzens (40) befestigt ist.

3. Fahrzeugsitz nach Anspruch 1 oder 2, **dadurch gekennzeichnet, dass** das Sitzrahmen-Seitenteil (22) am zweiten Abschnitt (40b) des Kombibolzens (40) anliegt.

4. Fahrzeugsitz nach Anspruch 3, **dadurch gekennzeichnet, dass** durch Befestigen des Beschlagunterteils (30a) am ersten Abschnitt (40a) das am zweiten Abschnitt (40b) anliegende Sitzrahmen-Seitenteil (22) am Beschlagunterteil (30a) befestigt wird.

5. Fahrzeugsitz nach Anspruch 3 oder 4, **dadurch gekennzeichnet, dass** der zweite Abschnitt (40b) einen größeren Durchmesser als der erste Abschnitt (40a) aufweist und dass der erste Abschnitt (40a) durch eine passende Öffnung des zugeordneten Sitzrahmen-Scitenteils (22) gesteckt ist bis zur Anlage des zweiten Abschnitts (40b) an das Sitzrahmen-Seitenteil (22).

6. Fahrzeugsitz nach einem der vorhergehenden Ansprüche, **dadurch gekennzeichnet, dass** der Kombibolzen (40) ein Sackloch (41) aufweist, wobei durch Einschrauben einer Schraube (42) in das Sackloch (41) das Beschlagunterteil (30a) mit dem Sitzrahmen-Seitenteil (22) verschraubt wird.

7. Fahrzeugsitz nach einem der vorhergehenden Ansprüche, **dadurch gekennzeichnet, dass** die Koppel (28) einLangloch (28a) zum Umschließen des Kombibolzens (40) aufweist.

8. Fahrzeugsitz nach einem der vorhergehenden Ansprüche, **dadurch gekennzeichnet, dass** auf dem Kombibolzen (40) ein Sicherungsring (43) oder Wulst sitzt, welcher die Koppel (28) in axialer Richtung auf dem Kombibolzen (40) sichert.

9. Fahrzeugsitz nach einem der vorhergehenden Ansprüche, **dadurch gekennzeichnet, dass** der Kombibolzen (40) einen vierten Abschnitt (40e) aufweist, auf welchem die Sitzschale (34) gelagert ist.

10. Fahrzeugsitz nach Anspruch 9, **dadurch gekennzeichnet, dass** die Sitzschale (34) mittels einer Gabel (44) auf dem vierten Abschnitt (40e) des Kombibolzens (40) gelagert ist.

11. Fahrzeugsitz nach Anspruch 10, **dadurch gekennzeichnet, dass** der Kombibolzen (40) einen fünften Abschnitt (40f) aufweist, welcher die Gabel (44) auf dem Kombibolzen (40) in axialer Richtung sichert.

## Claims

1. Vehicle seat, in particular motor vehicle seat, comprising a seat frame (20) which has at least one lateral seat-frame part (22), a seat shell (34) borne by the seat frame (20), at least one fitting (30) having a lower fitting part (30a), a backrest (32) which is connected to the seat frame (20) by means of the fitting (30), and at least one combined bolt (40) which, on the one hand, fixes the lower fitting part (30a) at the lateral seat-frame part (22) and on which, on the other hand, the seat shell (34) is mounted, wherein the combined bolt (40) comprises several sections (40a, 40b, 40c, 40d, 40e) having different diameters or other dimensions, comprising a first section (40a) and a second section (40b), **characterized in that** the seat frame (20) is connected to a base (3) by means of a height adjuster (10), wherein the height (z) of the seat frame (20) is adjustable relative to the base (3) by means of the height adjuster (10), and wherein the height adjuster (10) comprises front and rear rockers (11, 12) and at least one coupler (28) which couples the drive of the height adjuster (10) - which is mounted at the front - to one of the rear rockers (12), wherein the combined bolt (40) guides the coupler (28) by means of a third section (40c).

2. Vehicle seat according to Claim 1, **characterized in that** the lower fitting part (30a) is fixed to the first section (40a) of the combined bolt (40).

3. Vehicle seat according to Claim 1 or 2, **characterized in that** the lateral seat-frame part (22) is adjacent to the second section (40b) of the combined bolt (40).

4. Vehicle seat according to Claim 3, **characterized in that**, by fixing the lower fitting part (30a) to the first section (40a), the lateral seat-frame part (22), which is adjacent to the second section (40b), is fixed to the lower fitting part (30a).

5. Vehicle seat according to Claim 3 or 4, **characterized in that** the second section (40b) has a bigger diameter than the first section (40a), and that the first section (40a) is put through a suitable opening of the corresponding lateral seat-frame part (22), until the second section (40b) fits to the lateral seat-frame part (22).

6. Vehicle seat according to any of the preceding claims, **characterized in that** the combined bolt (40) comprises a blind hole (41), whereby, by screwing a screw (42) into the blind hole (41), the lower fitting part (30a) is screwed to the lateral seat-frame part (22).

7. Vehicle seat according to any of the preceding claims, **characterized in that** the coupler (28) comprises an oblong hole (28a) which encloses the combined bolt (40).

8. Vehicle seat according to any of the preceding claims, **characterized in that** a locking ring (43) or bulge is mounted on the combined bolt (40), which secures the coupler (28) axially on the combined bolt (40).

9. Vehicle seat according to any of the preceding claims, **characterized in that** the combined bolt (40) comprises a fourth section (40e), on which the seat shell (34) is mounted.

10. Vehicle seat according to Claim 9, **characterized in that** the seat shell (34) is mounted on the fourth section (40e) of the combined bolt (40), by means of a fork (44).

11. Vehicle seat according to claim 10, **characterized in that** the combined bolt (40) comprises a fifth section (40f), which secures the fork (44) on the combined bolt (40) axially.

## Revendications

1. Siège de véhicule, en particulier siège de véhicule automobile, avec un bâti de siège (20) qui possède au moins une partie latérale de bâti de siège (22), avec une coque de siège (34) portée par le bâti de siège (20), avec au moins une armature (30) possédant une pièce inférieure d'armature (30a), avec un dossier (32) qui est relié au bâti de siège (20) par l'armature (30) et avec au moins un goujon combiné (40) qui d'une part fixe la pièce inférieure d'armature (30a) sur la partie latérale de bâti de siège (22) et d'autre part supporte la coque de siège (34), le goujon combiné (40) présentant plusieurs segments (40a, 40b, 40c, 40d, 40e) ayant différents diamètres ou différentes autres dimensions, dont un premier segment (40a) et un deuxième segment (40b), **caractérisé par le fait que** le bâti de siège (20) est relié à une base (3) par l'intermédiaire d'un moyen de réglage en hauteur (10), dans lequel le moyen de réglage en hauteur (10) permet de régler le bâti de siège (20) en hauteur (z) par rapport à la base (3) et dans lequel le moyen de réglage en hauteur (10) comprend des biellettes antérieures et postérieures (11, 12) et au moins une bielle (28) qui relie à l'une des biellettes postérieures (12) le mécanisme d'entraînement, implanté à l'avant, du moyen de réglage en hauteur (10) et dans lequel le goujon combiné (40) guide la bielle (28) à l'aide d'un troisième segment (40c).

2. Siège de véhicule selon la revendication 1, **caractérisé par le fait que** la pièce inférieure d'armature (30a) est fixée sur le premier segment (40a) du goujon combiné (40).

3. Siège de véhicule selon l'une des revendications 1 ou 2, **caractérisé par le fait que** la partie latérale de bâti de siège (22) repose sur le deuxième segment (40b) du goujon combiné (40).

4. Siège de véhicule selon la revendication 3, **caractérisé par le fait que**, du fait de la fixation de la pièce inférieure d'armature (30a) sur le premier segment (40a), la partie latérale de bâti de siège (22) reposant sur le deuxième segment (40b) est fixée sur la pièce inférieure d'armature (30a).

5. Siège de véhicule selon l'une des revendications 3 ou 4, **caractérisé par le fait que** le deuxième segment (40b) possède un diamètre supérieur à celui du premier segment (40a) et **par le fait que** le premier segment (40a) passe dans une ouverture adaptée de la partie latérale de bâti de siège (22) qui lui est associée en mettant le deuxième segment (40b) en butée contre la partie latérale de bâti de siège (22).

6. Siège de véhicule selon l'une des revendications précédentes, **caractérisé par le fait que** le goujon combiné (40) possède un trou borgne (41), le vissage d'une vis (42) dans le trou borgne (41) réalisant le vissage de la pièce inférieure d'armature (30a) sur la partie latérale de bâti de siège (22).

7. Siège de véhicule selon l'une des revendications précédentes, **caractérisé par le fait que** la bielle (28) possède un trou oblong (28a) entourant le goujon combiné (40).

8. Siège de véhicule selon l'une des revendications précédentes, **caractérisé par le fait que** le goujon combiné (40) porte une rondelle d'arrêt (43) ou un bourrelet qui immobilise la bielle (28) sur le goujon combiné (40) dans la direction axiale.

9. Siège de véhicule selon l'une des revendications précédentes, **caractérisé par le fait que** le goujon combiné (40) possède un quatrième segment (40e) qui supporte la coque de siège (34).

10. Siège de véhicule selon la revendication 9, **caractérisé par le fait que** la coque de siège (34) est supportée sur le quatrième segment (40e) du goujon combiné (40) par une fourchette (44).

11. Siège de véhicule selon la revendication 10, **caractérisé par le fait que** le goujon combiné (40) possède un cinquième segment (40f) qui immobilise la fourchette (44) sur le goujon combiné (40) dans la direction axiale.
